(19) Europäisches Patentamt
European Patent Office
Office européen des brevets

(11) Veröffentlichungsnummer : **0 385 493 B1**

# (12) EUROPÄISCHE PATENTSCHRIFT

(45) Veröffentlichungstag der Patentschrift :
**21.07.93 Patentblatt 93/29**

(51) Int. Cl.$^5$ : **C04B 7/24,** C04B 7/345

(21) Anmeldenummer : **90104080.8**

(22) Anmeldetag : **02.03.90**

(54) Verfahren zur Herstellung von Chlorosilikaten sowie deren Verwendung.

(30) Priorität : **02.03.89 DE 3906617**

(43) Veröffentlichungstag der Anmeldung :
**05.09.90 Patentblatt 90/36**

(45) Bekanntmachung des Hinweises auf die
Patenterteilung :
**21.07.93 Patentblatt 93/29**

(84) Benannte Vertragsstaaten :
**AT BE CH DE DK ES FR GB IT LI LU NL SE**

(56) Entgegenhaltungen :
FR-A- 2 425 413
GB-A- 1 534 727
US-A- 4 119 467

(56) Entgegenhaltungen :
CHEMICAL ABSTRACTS, vol. 107, no. 14, Columbus, Ohio, USA E.C.SUBBARAO et al: "Characterization of alinite cements through x-ray diffraction and MAS silicon-29 NMR studies" Mater. Res. Bull., 22(8), 1055-62 ref. no. 120089K
CHEMICAL ABSTRACTS, vol. 114, no. 2, Columbus, Ohio, USA,F. von LAMPE et al: "Manufacture of calcium silicate sulfate chloride"

(73) Patentinhaber : **Rheinische Kalksteinwerke GmbH.**
**Wilhelmstrasse 77**
**W-5603 Wülfrath (DE)**

(72) Erfinder : **Oberste-Padtberg, Rüdiger, Dr. rer. nat.**
**Dornröschenweg 36**
**W-5600 Wuppertal 1 (DE)**

EP 0 385 493 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Verfahren zur Herstellung von Chlorosilikaten sowie deren Verwendung

Die Erfindung betrifft ein Verfahren zur Herstellung eines verwertbaren oder deponiefähigen Produktes mit geringer Eluierbarkeit durch Wasser aus halogenidhaltigen Rückständen aus der Abgasreinigung sowie die Verwendung von nach dem Verfahren hergestellten Chlorosilikaten in Form von Alinitzement.

Rückstände aus der Abgasreinigung können, insbesondere wenn sie nach trocken oder quasitrocken arbeitenden Rauchgasreinigungsverfahren hinter Müllverbrennungsanlagen anfallen, hohe Halogenidanteile enthalten. So kann z. B. der Massenanteil an Chloriden 20 % und mehr betragen. Es können aber auch Fluoride enthalten sein.

Die Rauchgasreinigung in Müllverbrennunganlagen erfolgt bei den oben genannten Rauchgasreinigungsverfahren beispielsweise in Sprüh- oder Trockensorptionsanlagen über die Umsetzung von hauptsächlich HCl, $SO_2$, $SO_3$ und HF durch Calciumhydroxid ($Ca(OH)_2$). Die sich hieraus ergebenden Phasen in den Rückständen sind neben basischem Chlorid ($CaCl_2 . Ca(OH)_2 . n H_2O$), Calciumchlorid ($CaCl_2 . n H_2O$), Anhydrit ($CaSO_4$), Halbhydrat ($CaSO_4 . 1/2 H_2O$), Gips ($CaSO_4 . 2 H_2O$) und Fluorit ($CaF_2$), die den Restportlandit ($Ca(OH)_2$) schalenförmig umgeben. Aus dem konzentrischen Aufbau dieser Rauchgasreinigungsrückstände ergibt sich, daß die wasserlöslichen Bestandteile (1), die meist überwiegend Chloride und geringe Mengen an Fluoriden enthalten und das nicht verbrauchte Absorptionsmittel (2) umgeben, bei der Bestimmung der Eluierbarkeit mit Wasser nach DIN 38414, Teil 4, zu fast 100 % ausgelaugt werden.

Darüber hinaus wird das Absorptionsmittel durch die hohe $CO_2$-Aktivität in den Rauchgasen noch partiell zu $CaCO_3$ karbonatisiert und durch Flugaschepartikel verunreinigt. Somit treten in den oben genannten Rückständen noch unterschiedliche Mengen an Calciumaluminosilikaten, Alkalialuminosilikaten sowie Eisenoxiden und Eisenhydroxiden auf. Sowohl an den Flugaschepartikeln als auch an den Rauchgasreinigungsrückständen kondensieren leichtflüchtige Schwermetallverbindungen, meist Pb-, Zn- und Cu-Verbindungen.

Eine direkte Verwertung solcher Stäube aus Müllverbrennungsanlagen in größeren Anteilen z. B. als Zuschlagstoff in Beton oder im Straßenbau verbietet sich sowohl wegen der hohen Chloridgehalte und der Wasserlöslichkeit der meisten Chloridverbindungen als auch wegen der Schwermetallgehalte.

Bekannt ist, z. B. aus der DE-OS 37 20 948, die chloridhaltigen Stäube aus Müllverbrennungsanlagen durch Zumischen chloridärmerer Aschen und Stäube und nach Zugabe von Zement und darauf abgestimmtem Anmachwasser als aushärtbare Mörtelmischung zu deponieren. Bedingt durch das basische Milieu werden die Schwermetalle dabei in Verbindungen mit sehr niedriger Löslichkeit überführt, hingegen erfolgt die Fixierung der Hauptkomponente Calciumchlorid nicht oder nur zum geringen Teil durch eine chemische Bindung in der Zementmatrix. Vielmehr wird die Auslaugung durch eine starke Absenkung der Durchlässigkeit und durch eine Behandlung der Oberfläche des entstehenden Betonmonolithen vermindert.

Auch bei anderen Verfahren, wie z. B. aus US-PS 4 116 705, US-PS 4 226 630 und DE-OS 29 50 462 bekannt, werden die Rückstände durch Vermischen mit hydraulischen Bindemitteln und Wasser in aushärtende Produkte überführt. Bei US-PS 4 116 705 ist insbesondere nachteilig, daß als hochwertiges Bindemittel Portlandzement eingesetzt werden muß. Aus DE-OS 37 05 892 ist bekannt, bei der Zementherstellung anfallende alkalireiche Bypassstäube zu Zementklinker weiterzuverarbeiten.

Der Erfindung liegt die Aufgabe zugrunde, bei dem eingangs angegebenen Verfahren die mit Wasser auslaugbaren Bestandteile so in eine mineralische Matrix einzubauen, daß, verglichen mit unbehandelten calcium halogenidhaltigen Rückständen aus der Abgasreinigung, eine deutlich verringerte Eluierbarkeit erreicht wird. Eine weitere Aufgabe besteht darin, die Rückstände in ein Produkt zu überführen, das als hydraulisches Bindemittel Verwendung finden kann.

Die Verringerung der Eluierbarkeit wird dadurch erreicht, daß man die calcium halogenidhaltigen Rückstände als Bestandteil eines Rohmehls mit einem $CaO/SiO_2$-Verhältnis zwischen 1,7 und 3,4 zur Herstellung von Chlorosilikaten einer thermischen Behandlung unterwirft.

Das Verfahren ist vorzugsweise geeignet für calcium halogenidhaltige Rückstände aus der Rauchgasreinigung von Müllverbrennungsanlagen. Diese Rückstände enthalten meistens CaO, Chloride und z. B. durch Flugaschekontaminierung auch $SiO_2$ als Hauptbestandteile, wobei das $CaO/SiO_2$-Verhältnis häufig zwischen 2 und 3 liegt.

Es ist vorteilhaft, die thermische Behandlung des Rohmehls bei Temperaturen von 850 bis 1250 °C durchzuführen. Unterhalb 850 °C setzt die Reaktion von $SiO_2$ mit den Chloriden und dem CaO nicht ein. Oberhalb 1250 °C tritt eine Destabilisierung der Chlorosilikate auf. Als Brennaggregate sind Schachtöfen und Drehrohröfen geeignet. Die thermische Behandlung kann aber auch mit Wirbelschichtverfahren durchgeführt werden.

Es kann je nach Zusammensetzung der calcium halogenidhaltigen Rückstände aus der Abgasreinigung vorteilhaft sein, dem Rohmehl calciumoxid- und/oder siliciumdioxidhaltige Zusätze hinzuzugeben. Damit kann, falls erforderlich, der Calciumchlorid-Gehalt im Rohmehl erniedrigt werden und das CaO/SiO$_2$-Verhältnis optimal eingestellt werden, um die Handhabbarkeit des Rohmehls und die Eluierbarkeit des nach dem Brennen erhaltenen Produktes günstig zu beeinflussen. Außerdem läßt sich durch geeignete Wahl der Rohmehlzusammensetzung das Brennverhalten hinsichtlich Brenndauer und Brenntemperatur günstig beeinflussen.

Als weitere Ausgestaltung des Verfahrens können dem Rohmehl auch Al$_2$O$_3$- und/oder sulfathaltige Zusätze hinzugegeben werden. Es wurde gefunden, daß auch Sulfat-Anteile > 10 % im Rohmehl zugelassen werden können, ohne daß dadurch Abbindeverhalten und Eluierbarkeit des gebrannten Produktes verschlechtert werden.

Besonders vorteilhaft ist es, wenn man als Zusätze, die einen oder mehrere Stoffe der Gruppe CaO, SiO$_2$, Al$_2$O$_3$ und Sulfat enthalten können, dem Rohmehl Flugasche und/oder Schlacken und/oder Rückstande aus der Abgasreinigung zusetzt. Damit wird für diese Reststoffe eine weitere Verwendungs- oder Entsorgungsmöglichkeit geschaffen.

Eine weitere vorteilhafte Ausgestaltung der Erfindung besteht darin, daß man die Rohmehlzusammensetzung zur Erzeugung eines Alinitzementes so einstellt, daß das CaO/SiO$_2$-Verhältnis > 2,5 und der Chloridgehalt > 4,5 % beträgt.

Besonders vorteilhaft ist es, den nach dem erfindungsgemäßen Verfahren erhaltenen Alinitzement als Bindemittel zur Verfestigung von zu deponierenden Reststoffen einzusetzen. Damit wird es möglich, bei Deponiegut, das verfestigt werden muß (zum Beispiel Stäube), den üblicherweise eingesetzten Zement (zum Beispiel Portlandzement oder Hochofenzement) durch ein Bindemittel zu ersetzen, das seinerseits aus Reststoffen hergestellt wurde. Bei geringerer Eluierbarkeit wird zugleich eine bessere Ausnutzung des Deponieraumes erreicht. Eine vorteilhafte Ausgestaltung kann auch darin bestehen, den nach dem erfindungsgemäßen Verfahren erhaltenen Alinitzement als Ersatz für calciumchloridbeschleunigte Portlandzemente zu verwenden. Damit kann überall dort, wo der Chloridgehalt nicht störend ist, ein preiswerter Ersatz für Portlandzement zur Verfügung gestellt werden. Calciumchlorid-beschleunigte Zementsysteme sind zum Beispiel für Tiefbohrzwecke und Bergbaumörtel von Interesse.

Nachstehend sind zwei Ausführungsbeispiele zur näheren Erläuterung aufgeführt.

Beiden Beispielen ist gemeinsam, daß zur Herstellung des erfindungsgemäßen Alinitzementes der Rauchgasreinigungsrückstand einer Müllverbrennungsanlage als Calciumchlorid-Träger verwendet wurde und die Rohmehlzusammensetzung durch Hinzufügen der erfindungsgemäßen Zusätze eingestellt wurde. Die einzelnen Laborchargen betrugen zwischen 150 g und 5 kg. Sie wurden in Graphittiegeln gebrannt. Die Brenntemperatur betrug 1050 °C bei einer Brenndauer von 2 h.

Durch Zusatz von CaO, SiO$_2$, Al$_2$O$_3$ und MgO wurde folgende der Alinitstöchiometrie entsprechende Rohmehlzusammensetzung eingestellt.

## Beispiel 1

| | |
|---|---|
| CaO | 61 % |
| SiO$_2$ | 23 % |
| Al$_2$O$_3$ | 4,7 % |
| MgO | 2,3 % |
| CaCl$_2$ | 7,6 % |

Ausgehend von der Mischung nach Beispiel 1 kann das CaO/SiO$_2$-Verhältnis durch Zugabe von CaO in weiten Bereichen variiert werden.

Die Bestimmung der Eluierbarkeit wurde durchgeführt, indem 100 g des zementfein aufgemahlenen Klinkers mit einer Blaine-Oberfläche von 2100 cm$^2$/g mit 1 Liter Wasser versetzt und 24 h lang über Kopf gedreht wurden. Dieser Test geht also über die Anforderungen nach DIN 38414 hinaus. Es zeigte sich, daß bei CaO/SiO$_2$-Verhältnissen zwischen 1,7 und 3,4 aus dem gebrannten Material Chlorid in Massenanteilen von 20 bis 60 % eluiert wurde. Die Eluierbarkeit des Chlorosilikates verringert sich bei CaO/SiO$_2$-Verhältnissen von < 2,3 deutlich, jedoch reichen im Verhältnis-Bereich < 2,5 die CaO-Gehalte der Mischung zur Bildung einer hydraulischen Komponente nicht aus und das Material bindet nicht ab.

Um aus dem Rauchgasreinigungsrückstand einer Müllverbrennungsanlage mit dem Zusatz von ggf. SiO$_2$, CaO und Al$_2$O$_3$ ein hydraulisch erhärtendes Material zu erhalten, muß das CaO/SiO$_2$-Verhältnis in jedem Fall größer als 2,5 sein, wobei ein Minimum der Eluierbarkeit mit Wasser bei einem Verhältnis von 2,75 erreicht wird.

Durch Zusatz einer Flugasche aus einer Müllverbrennungsanlage und zusätzlichem CaO wurde folgende Rohmehlzusammensetzung eingestellt (Massenanteile in %):

Beispiel 2

| CaO | 46,9 % |
|---|---|
| $SiO_2$ | 16,0 % |
| $CaCl_2$ | 13,8 % |
| $Al_2O_3$ | 4,9 % |
| $Fe_2O_3$ | 1,8 % |
| MgO | 1,3 % |
| $K_2O$ | 1,0 % |
| $SO_3$ | 2,3 % |
| Rest | 3,7 % |
| Glühverlust | 8,3 % |

Damit betrug bei diesem Beispiel der Chloridgehalt 8,8 %, das $CaO/SiO_2$-Verhältnis 2,9 und das $CaO/Al_2O_3$-Verhältnis 9,6.

Nach dem Brennen wurden als Hauptbestandteile Gamma-Alinit, Belit, Mayenit ($12\,CaO . 7\,Al_2O_3$), $2\,CaO . SiO_2 . CaCl_2$ und unterschiedliche Anteile an Freikalk erhalten. Die Freikalkgehalte im erbrannten Produkt werden bei gleichbleibender Rohmehlzusammensetzung durch Brenndauer und Brenntemperatur beeinflußt.

Die dünnviskose, chloridhaltige Schmelze bei der Alinitzementbildung bewirkt eine schnelle Diffusion der Hauptoxide CaO, $Al_2O_3$ und $SiO_2$ und somit, verglichen mit der Portlandzementklinkerbildung, bei niedrigerer Temperatur eine beschleunigte Gleichgewichtseinstellung während des Brennvorganges. Bei gleichen Brennbedingungen bewirken steigende Chloridgehalte eine zunehmende Einbindung des Freikalkes in die Calciumchlorosilikate und somit eine Abnahme des nicht reagierten CaO.

Weitere Versuche zur Bestimmung des maximalen Chlorid-Einsatzes im Rohmehl zeigten, daß die Eluierbarkeit mit Wasser beim gebrannten Produkt linear mit zunehmendem Chloridgehalt des Alinitzementes ansteigt. Bei einem Rohmehl mit mehr als 9 % Chlorid ergeben sich jedoch Mahlprobleme, da das Material stark hygroskopisch wird und das Mahlaggregat verklebt.

Zylindrische Proben mit einem Radius von von 5 cm und einer Höhe von 12 cm, die aus nach dem erfindungsgemäßen Verfahren hergestellten Alinitzement nach Beispiel 2 mit Wasser zu einer fließfähigen Konsistenz angemischt wurden, erwiesen sich nach mehrmonatiger Wasserlagerung ohne Rißbildung als wasserstabil. Außerdem wurde die für Alinitzement typische hohe Frühfestigkeit erreicht.

Damit ist der aus Reststoffen hergestellte Alinitzement auch als Deponiebinder für die Verfestigung von unbehandelten Müllverbrennungsrückständen geeignet. Wird z. B. ein Trockenmörtel, bestehend aus 40 % Alinitzement nach Beispiel 2, 20 % unbehandeltem Rauchgasreinigungsrückstand aus einer Müllverbrennungsanlage und 40 % Flugasche, mit einem Wasser/Feststoffverhältnis von 0,37 gemischt und hydratisiert, so enthält man nach 24 h eine Druckfestigkeit von 4,7 $N/mm^2$. Damit wird der für die Befahrbarkeit eines Deponiekörpers erforderliche Wert weit überschritten.

Die Eluierbarkeit wurde ebenfalls an den Probekörpern bestimmt. Nach einer Hydratationszeit von 24 h wurden die Proben von Wasser mit einer Fließgeschwindigkeit von 10 $l/(m^2 . h)$ umspült. Das Eluat wurde beprobt und auf Chlorid analysiert.

Durch das Brennen von calciumchloridhaltigen Müllverbrennungsrückständen zu Alinitzement verringert sich die Eluierbarkeit mit Wasser. Die Deponiefähigkeit dieses Materials wird ermöglicht oder verbessert.

Tab. 1   Eluierbarkeit an Probekörpern nach Stand der
         Technik

| Zusammensetzung | Chloridgehalt im Probekörper in g/l | Anteil an eluiertem Chlorid nach 78 h in % |
|---|---|---|
| 22 % Hochofenzement<br>28 % Wirbelschichtasche<br>50 % Rückstand aus Müllverbrennungsanlage | 108 | 50,2 |
| 22 % Portlandzement<br>28 % Wirbelschichtasche<br>50 % Rückstand aus Müllverbrennungsanlage | 108 | ˙61,0 |

Tab. 2   Eluierbarkeit an Probekörpern, hergestellt
         unter Verwendung des erfindungsgemäßen
         Alinitzementes nach Beispiel 2

| Zusammensetzung | Chloridgehalt im Probekörper in g/l | Anteil an eluiertem Chlorid nach 78 h in % |
|---|---|---|
| 40 % Alinitzement<br>40 % Flugasche<br>20 % Rückstand aus Müllverbrennungsanlage | 110 | 28,0 |
| 100 % Alinitzement | 161 | 13,4 |

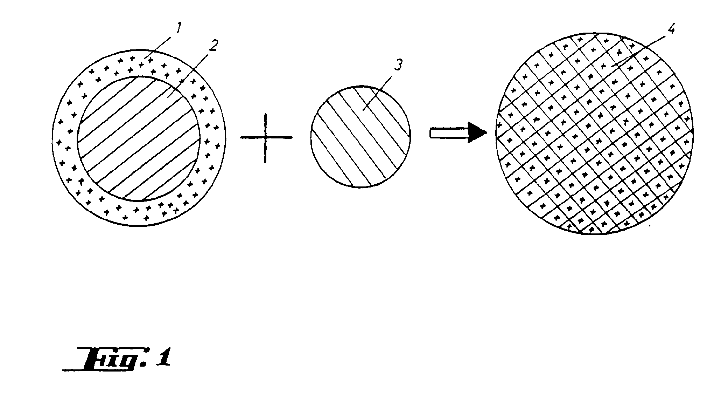

In Fig. 1 ist schematisch dargestellt, daß die wasserlöslichen Bestandteile (1), wie Calciumchlorid oder Schwermetallverbindungen, bei Rückständen aus der Rauchgasreinigung von Müllverbrennungsanlagen konzentrisch um das nicht verbrauchte Absorptionsmittel (2) angeordnet sind und damit bei Wasserkontakt gänzlich herausgelöst werden können. Nach Hinzufügen der erfindungsgemäßen Zusätze (3) und nach der thermischen Behandlung verteilen sich die löslichen Bestandteile homogen in dem neu gebildeten Chlorosilikat (4). Ein Herauslösen aus aus dem Chlorosilikat (4) ist nur bei gleichzeitiger Auflösung der Silikatmatrix möglich. Darüber hinaus wird aus dem Alinitzement gelöstes Chlorid durch dessen Einbindung, in z. B. Friedelsches Salz und Calciumsilikathydrat-Phasen immobilisiert.

Der Chloridgehalt kann durch den Anteil an Rauchgasreinigungsrückständen aus Müllverbrennungsanlagen gesteuert werden. Der $SiO_2$-Gehalt und das optimale $CaO/SiO_2$-Verhältnis sollte durch die Zugabe von Flugaschen, die aus Müllverbrennungsanlagen, aber auch aus der Verbrennung von Stein- oder Braunkohle stammen können oder Schlacken eingestellt werden. Hierbei sollte einem Reststoff, der das $CaO/Al_2O_3$-Verhältnis der Rohmehlmischung auf < 10 senkt, der Vorzug gegeben werden.

Gegebenenfalls müßte der notwendige CaO-Gehalt über die Zugabe von Kalksteinmehl oder anderen CaO-reichen Reststoffen eingestellt werden.

Ein Vorteil des erfindungsgemäßen Verfahren ist es, daß die Herstellung von Alinitzement aus Reststoffen möglich wird. Dieses Bindemittel läßt sich bei im Vergleich zur Portlandzementklinkerbildung deutlich niedrigeren Temperaturen herstellen. Ein weiterer Vorteil besteht darin, daß durch die thermische Behandlung eventuell in den Rückständen enthaltene Dioxine und Furane bei Temperaturen oberhalb 600 °C sicher zerstört werden.

Die Herstellung und Verwendung von Alinitzement aus Rauchgasreinigungsrückständen aus Müllverbrennungsanlagen entspricht auch dem gesetzlichen vorrangigen Gebot zur Verwendung von Reststoffen und trägt zur Schonung von wertvollem Deponieraum bei.

## Patentansprüche

1. Verfahren zur Herstellung eines verwertbaren oder deponiefähigen Produktes mit geringer Eluierbarkeit durch Wasser aus calciumhalogenidhaltigen Rückständen aus der Abgasreinigung, **dadurch gekennzeichnet**, daß man die calciumhalogenidhaltigen Rückstände als Bestandteil eines Rohmehls mit einem $CaO/SiO_2$ -Verhältnis zwischen 1,7 und 3,4 zur Herstellung von Chlorosilikaten einer thermischen Behandlung unterwirft.

2. Verfahren nach Anspruch 1, dadurch gekennzeichnet, daß man calciumhalogenidhaltige Rückstände aus der Rauchgasreinigung von Müllverbrennungsanlagen einsetzt.

3. Verfahren nach Anspruch 1 oder 2, dadurch gekennzeichnet, daß man die thermische Behandlung des Rohmehls bei 850 - 1250 °C durchführt.

4. Verfahren nach einem der Ansprüche 1 bis 3, dadurch gekennzeichnet, daß man dem Rohmehl calciumoxid- und/oder siliciumdioxidhaltige Zusätze hinzugibt.

5. Verfahren nach einem der Ansprüche 1 bis 3, dadurch gekennzeichnet, daß man dem Rohmehl $Al_2O_3$- und/oder sulfathaltige Zusätze hinzugibt.

6. Verfahren nach einem der Ansprüche 4 oder 5, dadurch gekennzeichnet, daß man dem Rohmehl Flugasche und/oder Schlacken und/oder Rückstände aus der Abgasreinigung zusetzt.

7. Verfahren nach einem der Ansprüche 4 bis 6, dadurch gekennzeichnet, daß man die Rohmehlzusammensetzung zur Erzeugung eines Alinitzementes so einstellt, daß das $CaO/SiO_2$-Verhältnis > 2,5 und der Chloridgehalt > 4,5 % beträgt.

8. Verwendung des Alinitzementes, hergestellt nach dem Verfahren nach Anspruch 7, als Bindemittel zur Verfestigung von zu deponierenden Reststoffen.

9. Verwendung des Alinitzementes, hergestellt nach dem Verfahren nach Anspruch 7, als Ersatz für calciumchlorid-beschleunigte Portlandzemente.

## Claims

1. Process for the production of a product which may be used or disposed of in landfills with low water elutability from waste gas purification residues containing calcium halides, characterised in that the residues containing calcium halides are subjected to a thermal treatment as a constituent of a raw meal with a $CaO/SiO_2$ ratio between 1.7 and 3.4 for the production of chlorosilicates.

2. Process according to claim 1, characterised in that residues containing calcium halides from refuse incinerator flue gas purification are used.

3. Process according to claim 1 or 2, characterised in that thermal treatment of the raw meal is performed at 850 - 1250°C.

4. Process according to claims 1 to 3, characterised in that additives containing calcium oxide and/or silicon dioxide are added to the raw meal.

5. Process according to one of claims 1 to 3, characterised in that additives containing $Al_2O_3$ and/or sulphate are added to the raw meal.

6. Process according to one of claims 4 or 5, characterised in that fly ash and/or slag and/or residues from waste gas purification are added to the raw meal.

7. Process according to one of claims 4 to 6, characterised in that the raw meal composition for the production of an alinite cement is adjusted such that the CaO/SiO$_2$ ratio is > 2.5 and the chloride content is > 4.5%.

8. Use of the alinite cement produced according to the process according to claim 7 as a binder for the solidification of waste to be disposed of by landfill.

9. Use of the alinite cement produced according to the process according to claim 7 as a replacement for calcium chloride accelerated Portland cements.

**Revendications**

1. Procédé de fabrication d'un produit susceptible d'être utilisé ou susceptible d'être rejeté à la décharge, ayant une aptitude faible à l'élution par l'eau, à base de résidus renfermant des halogénures de calcium provenant de la purification de gaz de combustion, procédé caractérisé en ce que l'on soumet à un traitement thermique les résidus contenant des halogénures de calcium en tant que constituant d'un mélange brut ayant un rapport CaO/SiO$_2$ compris entre 1,7 et 3,4, en vue de la fabrication de chlorosilicates.

2. Procédé selon la revendication 1, caractérisé en ce que l'on met en oeuvre des résidus renfermant des halogénures de calcium, provenant de la purification des gaz de cheminée d'installations d'incinération d'ordures.

3. Procédé selon la revendication 1 ou la revendication 2, caractérisé en ce que l'on effectue le traitement thermique du mélange brut à 850-1250°C.

4. Procédé selon une des revendications 1 à 3, caractérisé en ce que l'on ajoute au mélange brut des additifs renfermant de l'oxyde de calcium et/ou du dioxyde de silicium.

5. Procédé selon une des revendications 1 à 3, caractérisé en ce que l'on ajoute au mélange brut des additifs renfermant Al$_2$O$_3$ et/ou des sulfates.

6. Procédé selon une des revendications 4 ou 5, caractérisé en ce que l'on ajoute au mélange brut des cendres volantes et/ou des scories et/ou des résidus provenant de la purification des gaz.

7. Procédé selon une des revendications 4 à 6, caractérisé en ce que l'on ajuste la composition du mélange brut pour l'obtention d'un ciment d'alinite de façon que le rapport CaO/SiO$_2$ s'élève à > 2,5 % et que la teneur en chlore s'élève à > 4,5 %.

8. Utilisation du ciment d'alinite obtenu selon le procédé selon la revendication 7 en tant qu'agent liant pour la consolidation des résidus qui sont à mettre à la décharge.

9. Utilisation du ciment d'alinite obtenu selon le procédé selon la revendication 7 comme produit de remplacement pour des ciments Portland catalysés par du chlorure de calcium.

EP 0 385 493 B1

Fig. 1

8